# EUROPÄISCHE PATENTSCHRIFT

(11) **EP 0 537 417 B1**
(45) Veröffentlichungstag und Bekanntmachung des Hinweises auf die Patenterteilung: **13.03.1996**
(21) Anmeldenummer: 92110719.9
(22) Anmeldetag: 25.06.1992
(51) Int. Cl.: B22C 7/02

(54) **Verlorenes Modell und Verfahren zu seiner Herstellung**
Lost pattern and process for making the same
Modèle perdu et procédé pour sa fabrication

(30) Priorität: 12.10.1991 DE 4133923
(43) Veröffentlichungstag der Anmeldung: 21.04.1993
(73) Patentinhaber: DEUTSCHE BABCOCK- BORSIG AKTIENGESELLSCHAFT, D-13507 Berlin (DE)
(72) Erfinder: Schneider, Wolfgang, Dr., W-1000 Berlin 41 (DE)
(74) Vertreter: Müller, Jürgen, Dipl.-Ing.

(56) Entgegenhaltungen:
- EP-A- 0 420 614
- FR-A- 1 337 560
- FR-A- 2 479 044
- US-A- 4 844 144

## Beschreibung

Die Erfindung betrifft ein verlorenes Modell aus einem niedrigschmelzenden Material für den Feinguß von Metall und ein Verfahren zu seiner Herstellung.

Verlorene Modelle in verlorenen Gießformen werden verwendet, wenn das zu fertigende Formteil eine komplexe Gestalt aufweist und ein enger Toleranzbereich eingehalten werden muß. Das verlorene Modell besteht aus einem niedrigschmelzenden Material, wie Wachs oder aus z. B. Sn, Bi, Sb und andere Metalle enthaltenden MCP-Legierungen. Derartige Modelle werden gegossen und nach dem Erstarren zur Bildung der Gießform in einem Formkasten mit Sand oder einem anderen mit Bindemitteln versehenen keramischen Material hinterfüllt. Nach dem Ausschmelzen des niedrigschmelzenden Materials aus der Gießform entsteht der Gießhohlraum (Dubbel: Taschenbuch für den Maschinenbau, 14. Auflage, Springer-Verlag 1981, Seiten 946 bis 949).

Die Herstellung der verlorenen Modelle ließe sich vereinfachen, wenn die Modelle ohne Werkzeug nach dem Prinzip der Stereolithographie gefertigt werden könnten (US-PS 45 75 330). Bei diesem Verfahren wird ein Laserstrahl verwendet, der direkt über eine rechnerunterstützte (CAD) Konstruktionszeichnung und einen Prozeßrechner gesteuert wird. Das UV-Licht des Laserstrahles wird auf flüssiges Monomer gerichtet, das sich in einer mit einer vertikal verstellbaren, perforierten Platte versehenen Wanne befindet. Das Monomer erhärtet unter dem Einfluß des UV-Lichtes des Laserstrahles durch Polymerisation und bildet ein festes, in der flüssigen Phase nicht mehr lösliches Polymer. Der gesteuerte Laserstrahl baut aufgrund dieser Reaktion auf der mit geringer Tiefe in das Flüssigkeitsbad der Wanne eintauchenden, perforierten Platte einen Körper entsprechend der Zeichnung schichtweise auf. Auf diese Weise lassen sich auch verlorene Modelle mit hoher Maßgenauigkeit herstellen. Eine solche Herstellung weist jedoch den Nachteil auf, daß die Herstellung eines vollwandigen Modelles sehr aufwendig ist, da die Herstellungszeit von dem Volumen des zu härtenden Materials abhängt. Außerdem würde das lichthärtende Polymer beim Ausschmelzen des Modells aus der Gießform sich zunächst stark ausdehnen, bevor er schmilzt. Damit besteht die Gefahr, daß die Gießform beim Ausschmelzen des Modelles gesprengt würde.

Der Erfindung liegt die Aufgabe zugrunde, mit Hilfe der Stereolithographie ein solches Modell herzustellen, das maßgenau ist und beim Ausschmelzen keine Schäden in der Gießform herbeiführt.

Diese Aufgabe wird erfindungsgemäß durch ein Modell mit den kennzeichnenden Merkmalen des Patentanspruches 1 gelöst. Eine vorteilhafte Ausgestaltung der Erfindung ist in dem Patentanspruch 2 angegeben. Ein Verfahren zur Herstellung des Modells ist Gegenstand des Patentanspruches 3.

Bei dem erfindungsgemäß hergestellten bzw. ausgebildeten Modell sind die Flächen, auf die es bei dem nach dem Modell zu fertigenden Gußstück entscheidend ankommt, maßgenau gestaltet. Die selbsttragende Schale aus laserlichtgehärtetem Polymer dient der Aufnahme des niedrigschmelzenden Materials. Dieses Material kompensiert beim Ausschmelzen aus der Gießform durch ein schnelles Flüssigwerden eine Wärmedehnung des lichthärtenden Polymers der Schale. Ein Platzen der Gießform wird auf diese Weise sicher verhindert.

Mehrere Ausführungsbeispiele der Erfindung sind in der Zeichnung dargestellt und werden im folgenden näher erläutert. Es zeigen:

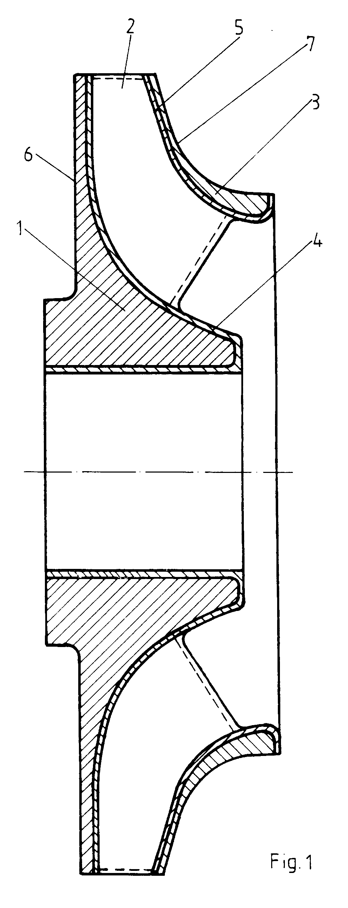

- Fig. 1: den Längsschnitt durch ein Modell,
- Fig. 2: die teilweise Draufsicht auf Fig. 1 und
- Fig. 3: die teilweise Draufsicht auf Fig. 1 gemäß einer anderen Ausführungsform.

Das in der Zeichnung dargestellte Modell ist das Modell für ein Laufrad eines Turboverdichters. Ein solches Laufrad besteht aus einer Nabenscheibe und einer Deckscheibe, zwischen denen gewundene Schaufeln angeordnet sind. Die Nabenscheibe, die Deckscheibe und die Schaufeln begrenzen den Strömungsquerschnitt des Laufrades. Die Nabenscheibe ist mit einer zentralen Bohrung versehen, die später die Antriebswelle des Turboverdichters aufnimmt. In der Zeichnung weist die Bezugsziffer 1 auf das der Nabenscheibe des Laufrades entsprechende Teil des Modelles hin. Das mit der Bezugsziffer 2 bezeichnete Teil entspricht den Schaufeln, und das mit 3 bezeichnete Teil entspricht der Deckscheibe.

Das Modell besteht aus einer selbsttragenden, dünnen Schale 4, 5 aus lichthärtendem Polymer. Diese Schale 4, 5 wird ohne Werkzeug mit Hilfe eines direkt über eine rechnergestützte Konstruktionszeichnung gesteuerten Laserstrahles durch Härten des flüssigen Polymers nach dem in der Beschreibungseinleitung erörterten, bekannten Verfahren der Stereolithographie hergestellt. Dabei bildet das Schalenteil 4 die äußere Form der Nabenscheibe 2 und das Schalenteil 5 die äußere Form der Deckscheibe 3. Diese von der Schale 4, 5 begrenzten Flächen sind formbestimmend und begrenzen in dem später gegossenen Laufrad den Strömungsquerschnitt.

Der von der Schale 4, 5 umschlossene Innenraum wird mit einem niedrigschmelzenden Material soweit gefüllt, daß nach der Verfestigung die untergeordneten Flächen 6, 7 des Modells durch die Oberfläche des niedrigschmelzenden Materials begrenzt sind. Diese Flächen 6, 7 sind die dem Strömungsquerschnitt abgewandten Seiten der Nabenscheibe und der Deckscheibe des späteren Laufrades. Als niedrigschmelzendes Material wird Wachs oder eine Legierung aus Wismut und Zinn verwendet.

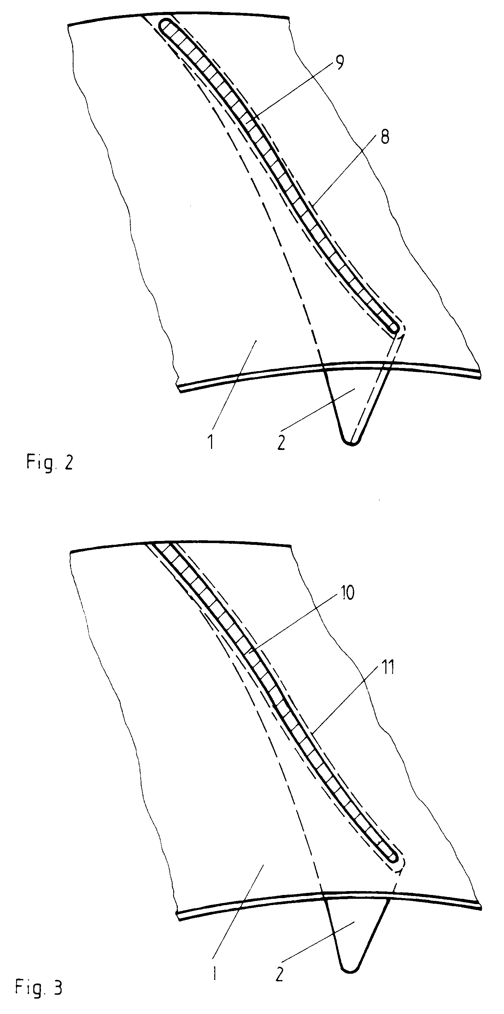

Die Schaufeln können ebenfalls in der oben beschriebenen Weise hergestellt werden. Wie aus Fig. 2 zu erkennen ist, besteht das der Schaufel 2 entsprechende Teil des Modells aus einer Schale 8 aus lichthärtendem Polymer. Der Innenraum 9 der Schale 8 ist mit dem niedrigschmelzenden Material ausgefüllt.

Sehr dünnwandige Teile, wie die Schaufeln 2 gemäß Fig. 3 oder Verstrebungen können mit Hilfe des oben beschriebenen Verfahrens nicht mehr hohl gefertigt werden. In diesem Fall wird mit Hilfe des Laserstrahles ein massiver Kern 10 aus lichthärtendem Polymer erzeugt. Dieser Kern 10 wird mit einer Schicht 11 aus niedrigschmelzendem Material umgeben. Auch hierbei kompensiert beim Ausschmelzen des Modells in der Gießform das niedrigschmelzende Material durch schnelles Flüssigwerden die Wärmedehnung des aus lichthärtendem Polymer bestehendes Kernes 10.

## Patentansprüche

1. Verlorenes, aus niedrigschmelzendem Material bestehendes Modell für den Feinguß von Metall, dadurch gekennzeichnet, daß die formgebenden Oberflächen des Modells aus einer dünnwandigen, selbsttragenden Schale (4, 5) aus einem lichthärtenden Polymer bestehen, daß die Schale (4, 5) mit Hilfe eines über eine rechnerunterstützte Konstruktionszeichnung direkt gesteuerten Laserstrahles gefertigt ist, daß der Innenraum der Schale (4, 5) von dem niedrigschmelzenden Material ausgefüllt ist und daß die nicht formgebenden Oberflächen (6, 7) des Modells durch das niedrigschmelzende Material begrenzt sind.

2. Modell nach Anspruch 1, dadurch gekennzeichnet, daß dünnwandige Teile des Modells aus einem massiven, aus einem lichthärtendem Polymer mit Hilfe des Laserstrahles gefertigten Kern (10) bestehen, der von einer Schicht (11) aus dem niedrigschmelzenden Material umgeben ist.

3. Verfahren zur Herstellung eines verlorenen, aus einem niedrigschmelzenden Material bestehenden Modells für den Feinguß von Metall gemäß Patentanspruch 1, dadurch gekennzeichnet, daß die formgebenden Oberflächen des Modells als selbsttragende, dünnwandige Schale aus einem lichthärtenden Polymer mit Hilfe eines über eine rechnerunterstützte Konstruktionszeichnung direkt gesteuerten Laserstrahles hergestellt werden und daß der Innenraum der Schale bis zu den nicht formbestimmenden Oberflächen des Modells mit dem niedrigschmelzenden Material ausgefüllt wird.

## Claims

1. Lost pattern, which consists of material of low melting point, for high quality casting of metal, characterised thereby that the shape-defining surfaces of the pattern consist of a thin-walled self-supporting shell (4, 5) of an optically curable polymer, that the shell (4, 5) is produced with the assistance of a laser beam directly controlled by a computer-aided working drawing, that the interior space of the shell (4, 5) is filled by the material of low melting point and that the surfaces (6, 7) of the mould which do not define shape are bounded by the material of low melting point.

2. Pattern according to claim 1, characterised thereby that the thin-walled parts of the pattern consist of a solid core (10) which is made from an optically curable polymer with the assistance of the laser beam and which is enclosed by a layer (11) of the material of low melting point.

3. Method for producing a lost pattern, which consists of a material of low melting point, for high quality casting of metal according to patent claim 1, characterised thereby that the shape-defining surfaces of the pattern are produced as a self-supporting thin-walled shell of an optically curable polymer with the assistance of a laser beam directly controlled by way of a computer-aided working drawing and that the interior space of the shell is filled with the material of low melting point up to the surfaces of the pattern which do not determine shape.

## Revendications

1. Moule perdu, constitué d'un matériau à bas point de fusion, pour la fonderie de précision de pièces en métal, caractérisé en ce que les surfaces formant le moulage sont constituées d'une coque (4, 5) à paroi mince auto-porteuse réalisée en un polymère photo-durcissant, en ce que la coque (4, 5) est fabriquée à l'aide d'un rayon laser commandé directement par l'intermédiaire d'un dessin de construction assisté par ordinateur, en ce que l'espace intérieur de la coque (4, 5) est rempli du matériau à bas point de fusion, et en ce que les surfaces (6,7) participant à la forme de moulage sont délimitées par le matériau à bas point de fusion.

2. Moule selon la revendication 1, caractérisé en ce que les parties à parois minces du moule sont constituées d'un noyau (10) massif, fabriqué à l'aide du rayon laser, à partir d'un polymère photo-durcissant, ce noyau étant entouré d'une couche (11) du matériau à bas point de fusion.

3. Procédé de fabrication d'un moule perdu constitué par un matériau à bas point de fusion, pour la fonderie de précision d'une pièce en métal, selon la revendication 1, caractérisé en ce que les surfaces, formant le moule sont fabriquées sous forme d'une coque à paroi mince autoporteuse constituée d'un polymère photo-durcissant, à l'aide d'un rayon laser commandé directement par l'intermédiaire d'un dessin de construction assisté par ordinateur, et en ce que l'espace intérieur de la coque, jusqu'aux surfaces de la forme du moule, est rempli du matériau à bas point de fusion.
